Europäisches Patentamt

European Patent Office

Office européen des brevets

(19)

(11) Veröffentlichungsnummer: **0 401 664**
**A2**

(12) # EUROPÄISCHE PATENTANMELDUNG

(21) Anmeldenummer: 90110251.7

(22) Anmeldetag: 30.05.90

(51) Int. Cl.⁵: **C08J 9/08, //(C08J9/08, C08L71:10),(C08L67/02,77:00, 81:06)**

(30) Priorität: 07.06.89 DE 3918583

(43) Veröffentlichungstag der Anmeldung:
**12.12.90 Patentblatt 90/50**

(84) Benannte Vertragsstaaten:
**BE DE FR GB IT NL**

(71) Anmelder: **BASF Aktiengesellschaft**
**Carl-Bosch-Strasse 38**
**D-6700 Ludwigshafen(DE)**

(72) Erfinder: **Nintz, Eckhard, Dr.**
**An der Froschlache 3**
**D-6700 Ludwigshafen(DE)**
Erfinder: **Weber, Heinz, Dr.**
**Am Wehrhaus 26**
**D-6718 Gruenstadt(DE)**
Erfinder: **Nickolaus, Wilhelm**
**Kranichstrasse 8**
**D-6700 Ludwigshafen(DE)**

(54) Verfahren zur Herstellung von Schaumstoffen mit hoher Wärmeformbeständigkeit und Schaumstoffe auf Basis von aromatischen Polyetherketonen.

(57) Schaumstoffe der Dichte 0,1 bis 1,0 g/cm³ auf Basis von aromatischen Polyetherketonen und anderen thermoplastischen Polymeren mit hoher Schmelztemperatur werden erhalten durch Schmelzen eines innigen Gemisches aus dem Polymeren und 0,5 bis 10 Gew.-% einer aliphatischen oder aromatischen Di- oder Polycarbonsäure, die beim Erhitzen auf 130 bis 300°C unter Abspaltung von gasförmigen Zersetzungsprodukten mindestens 50 % Gewichtsverlust erleidet, und Abkühlen unter Formgebung.

EP 0 401 664 A2

## Verfahren zur Herstellung von Schaumstoffen mit hoher Wärmeformbeständigkeit und Schaumstoffe auf Basis von aromatischen Polyetherketonen

Die Erfindung betrifft die Herstellung von Schaumstoffen auf Basis von Thermoplasten mit hoher Wärmeformbeständigkeit unter Verwendung von Di- und Polycarbonsäuren als chemisches Treibmittel. Die Erfindung betrifft ferner Schaumstoffe auf Basis von aromatischen Polyetherketonen.

Schaumstoffe auf Basis von aromatischen Polyetherketonen sind bisher nicht bekannt. Versuche, mit üblichen bekannten physikalischen oder chemischen Treibmitteln aus aromatischen Polyetherketonen Schaumstoffe herzustellen scheitern an der unbefriedigenden Löslichkeit der Treibmittel und der hohen Erweichungstemperatur dieser Polymeren. .

Der Erfindung lag die Aufgabe zugrunde, diese bisher unbekannten Schaumstoffe auf Basis von aromatischen Polyetherketonen herzustellen. Der Erfindung lag ferner die Aufgabe zugrunde, neuartige chemische Treibmittel für die Herstellung von Schaumstoffen mit homogener Zellstruktur auf Basis von hochtemperaturbeständigen Thermoplasten aufzufinden.

Diese Aufgaben werden gelöst durch die Verwendung von chemischen Treibmitteln auf Basis von Di- und Polycarbonsäuren, die beim Erhitzen auf 150 bis 300°C unter Abspaltung von gasförmigen Zersetzungsprodukten mindestens 50 Gew.-% Gewichtsverlust erleiden.

Gegenstand der Erfindung ist somit ein Verfahren zur Herstellung von Schaumstoffen mit hoher Wärmeformbeständigkeit dadurch gekennzeichnet, daß man ein inniges Gemisch aus

a) einem thermoplastischen Polymeren mit einer Erweichungstemperatur (Schmelztemperatur) von mehr als 200°C und

b) 0,5 bis 10 Gew.-%, bezogen auf a), einer aliphatischen oder aromatischen Di- oder Polycarbonsäure, die beim Erhitzen auf 130 bis 300°C unter Abspaltung von gasförmigen Zersetzungsprodukten mindestens 50 % Gewichtsverlust erleidet, aufschmilzt und unter Formgebung abkühlt.

Gegenstand der Erfindung sind ferner Schaumstoffe der Dichte 0,1 bis 1,0 g/cm³ auf Basis von aromatischen Polyetherketonen.

Es war bekannt, für die Herstellung von Schaumstoffen aus Thermoplasten ein Gemisch aus Natriumbicarbonat und organischen Säuren als Treibmittel zu verwenden. Natriumbicarbonat reagiert mit organischen Säuren unter Bildung von Kohlendioxid bereits bei niedrigen Temperaturen. Für die Herstellunhg von Schaumstoffen aus Thermoplasten mit hoher Schmelztemperatur ist das Verfahren daher ungeeignet.

Es ist für den Fachmann überraschend, daß zersetzliche organische Di- und Polycarbonsäuren selbst mit solchen Thermoplasten zu Schaumstoffen umgewandelt werden können, die eine wesentlich höhere Schmelztemperatur als die Zersetzungstemperatur des Treibmittels aufweisen, und daß die mechanischen Eigenschaften der Schaumstoffe durch die Zersetzungsprodukte des Treibmittels nicht beeinträchtigt werden.

Als Ausgangsstoffe für das neue verfahren sind alle thermoplastischen Polymeren mit einer Erweichungstemperatur (Schmelztemperatur) von mehr als 200°C, vorzugsweise zwischen 230 und 450°C, insbesondere zwischen 260 und 420°C geeignet, wie aliphatische, aromatische und teilaromatische Polyamide, Polyester auf Basis von aromatischen Dicarbonsäuren, insbesondere Terephthalsäure, und aliphatischen Diolen mit 2 bis 6 C-Atomen und/oder Bisphenolen, aromatische Polysulfone und Polyethersulfone, aromatische Polyether und Polysulfide, wie Poly-3,5-dimethylphenylenoxid und Polyphenylensulfid und aromatische Polyetherketone, wie PEK, PEKK, PEKEKK und PEEK.

Als chemische Treibmittel gemäß der Erfindung werden aliphatische oder aromatische Di- oder Polycarbonsäuren verwendet, die beim Erhitzen auf 130 bis 300°C unter Abspaltung von gasförmigen Zersetzungsprodukten einen Gewichtsverlust von mindestens 50 Gew.-% erleiden. Die geeignete Verbindung läßt sich leicht durch einen Test ermitteln, bei dem eine Probe unter Stickstoff mit einer Aufheizgeschwindigkeit von 4°C pro Minute erhitzt wird und die Temperatur bestimmt wird, bei der ein 50 %iger Gewichtsverlust eingetreten ist (= Zersetzungstemperatur z). Geeignet sind z.B. aliphatische Dicarbonsäuren mit 2 bis 8 C-Atomen, die gegebenenfalls eine Hydroxi- oder Ketogruppe enthalten, wie Oxalsäure (Z = 182°C), Malonsäure (Z = 252°C) Adipinsäure (Z = 245°C), Pimelinsäure (Z = 252°C) und Acetondicarbonsäure (Z = 135°C). Als aromatische Polycarbonsäure ist insbesondere Pyromellithsäure (Z = 275°C) geeignet.

Die Carbonsäure wird im allgemeinen in Mengen von 0,5 bis 10 Gew.-%, vorzugsweise 0,8 bis 8 Gew.-%, insbesondere 1 bis 6 Gew.-%, bezogen auf den Thermoplasten, verwendet. Durch Variation der Treibmittelmenge und des Befüllungsgrads der Form läßt sich die Dichte des Schaumstoffs einstellen.

Die Schaumstoffherstellung erfolgt durch Aufschmelzen eines innigen Gemisches aus Thermoplast und Treibmittel und Abkühlen unter Formgebung. Beispielsweise kann man die entsprechend der gewünschten Dichte berechnete Menge dieses Gemisches in eine geschlossene Form einfüllen und die Form auf die Schmelztemperatur erhitzen, wobei man zweckmäßig durch winzige Öffnungen der Form für ein Entweichen der in der Form beim Aufschäumen verdrängten Luft Sorge trägt. Nach dem Abkühlen kann der Schaumstoff-Formkörper aus der Form entnommen werden.

Man kann aber auch das Thermoplast-Treibmittel-Gemisch in einem Extruder unter Druck aufschmelzen und unter Entspannen in einem Formgebungskanal Schaumstoff-Platten herstellen.

Die erhaltenen Schaumstoffe haben im allgemeinen eine Dichte zwischen 0,1 und 1,0 $g/cm^3$, vorzugsweise 0,1 bis 0,8 $g/cm^3$, insbesondere 0,2 bis 0,7 $g/cm^3$.

Ihre Wärmeformbeständigkeit entspricht der des ihnen zugrunde liegenden Thermoplasten. Die Schaumstoffe zeichnen sich durch homogene Zellstruktur mit einem mittleren Zelldurchmesser von 0,03 bis 1,2, insbesondere 0,2 bis 0,8 mm aus.

Die erhaltenen Schaumstoffe finden Verwendung als Isolations- und Konstruktionsmaterial im Innenausbau von Kraftfahrzeugen, Luft- und Raumfahrzeugen.

Beispiel 1

100 Gewichtsteile Polyphenylenetherketon, aufgebaut aus Struktureinheiten der Formel $-C_6H_4-O-C_6H_4-O-C_6H_4-CO-$ (PEEK) in feinteiliger Form (Teilchengröße kleiner als 0,3 mm), Dichte 1,32 $g/cm^3$, Schmelztemperatur ca. 340° C wurden mit 2 Gewichtsteilen Pyromellithsäure innig vermischt. 60 Volumenteile der Mischung werden in eine geschlossene Metallform gefüllt, die das Entweichen von Gasen erlaubt (Formvolumen 100 Volumenteile). Die Form wird in einem Muffelofen 10 Minuten auf 380° C erhitzt und danach abgekühlt. Es wird ein Schaumstoff-Formteil der Dichte 0,75 $g/cm^3$ erhalten mit einer mittleren Zellgröße von 0,2 mm. Die Wärmeformbeständigkeit beträgt 260° C.

Beispiel 2

Es wurde wie in Beispiel 1 gearbeitet, jedoch 4 Gewichtsteile Pyromellithsäure verwendet. In die Form wurden 25 volumenteile der Mischung eingefüllt. Der erhaltene Schaumstoff hat eine Dichte von 0,32 $g/cm^3$ und einen mittleren Zelldurchmesser von 0,4 mm.

Beispiel 3

Es wurde wie in Beispiel 1 gearbeitet, jedoch wurde ein Gemisch aus 100 Gewichtsteilen Polyphenylenetherketon, aufgebaut aus Struktureinheiten der Formel $-C_6H_4-O-C_6H_4-CO-C_6H_4-O-C_6H_4-CO-C_6H_4-CO-$(PEKEKK), Dichte 1,31 $g/cm^3$, Schmelztemperatur ca. 375° C, und 4 Gewichtsteilen Pyromellithsäure verwendet. Die Form wurde 15 Minuten auf 420° C erhitzt. Der erhaltene Schaumstoff hat eine Dichte von 0,72 $g/cm^3$, mittlerer Zelldurchmesser 0,1 mm.

Beispiel 4

Entsprechend Beispiel 3 wurde unter Verwendung von 4 Gewichtsteilen Pyromellithsäure und einem Befüllungsgrad der Form von 35 % ein Schaumstoff der Dichte 0,42 $g/cm^3$, mittlerer Zelldurchmesser 0,3 mm hergestellt.

Beispiel 5

100 Gewichtsteile eines Polyesters auf Basis Terephthalsäure und Hydrochinon (LC-Polymeres) der Dichte 1,39 $g/cm^3$, Schmelztemperatur 260° C wurden mit 3,6 Gewichtsteilen wasserfreier Oxalsäure vermischt und in einer Form durch 15minütiges Erhitzen auf 330° C je nach Füllgrad zu einem Formteil der Dichte 0,4 $g/cm^3$ bzw. der Dichte 1,0 $g/cm^3$ aufgeschäumt. Die mittlere Zellgröße betrug 0,5 bzw. 0,04 mm.

Beispiel 6

100 Gewichtsteile eines teilaromatischen Copolyamids, aufgebaut aus Caprolactam und terephthalsäure/Hexamethylendiamin (Gewichtsverhältnis 30:70), Dichte 1,2 $g/cm^3$, Schmelztemperatur 295° C wurden mit 1,5 Gewichtsteilen Oxalsäure innig vermischt und in einer Form (Befüllungsgrad 70 %) 15 Minuten auf 350° C erhitzt. Der erhaltene Schaumstoff zeigt eine Dichte von 0,82 $g/cm^3$.

Beispiel 7

Man arbeitet wie in Beispiel 6, jedoch unter Verwendung von 2,5 Gewichtsteilen Oxalsäure und einem Befüllungsgrad der Form von 35 %. Es wurde ein Schaumstoff der Dichte 0,4 $g/cm^3$ erhalten.

**Ansprüche**

1. Verfahren zur Herstellung von Schaumstoffen mit hoher Wärmeformbeständigkeit, dadurch gekennzeichnet, daß man ein inniges Gemisch aus
a) einem thermoplastischen Polymeren mit einer Erweichungstemperatur (Schmelztemperatur) von mehr als 200°C und
b) 0,5 bis 10 Gew.-% bezogen auf a), einer aliphatischen oder aromatischen Di- oder Polycarbonsäure, die beim Erhitzen auf 130 bis 300°C unter Abspaltung von gasförmigen Zersetzungsprodukten mindestens 50 % Gewichtsverlust erleidet,
aufschmilzt und unter Formgebung abkühlt.

2. Verfahren nach Anspruch 1, dadurch gekennzeichnet, daß man als Komponente a) Polyamide, Polyester aromatischer Dicarbonsäuren, aromatische Polysulfone oder Polyethersulfone und aromatische Polyetherketone verwendet.

3. Verfahren nach Anspruch 1 bis 2, dadurch gekennzeichnet, daß man als Komponente b) aliphatische Dicarbonsäuren mit 2 bis 8 C-Atomen, die gegebenenfalls eine Hydroxi- oder Ketogruppe enthalten, oder Pyromellithsäure verwendet.

4. Schaumstoffe der Dichte 0,1 bis 1,0 g/cm³ auf Basis von aromatischen Polyetherketonen.

## DOCUMENTS CONSIDERED TO BE RELEVANT

EP 90110257.4

| Category | Citation of document with indication, where appropriate, of relevant passages | Relevant to claim | CLASSIFICATION OF THE APPLICATION (Int Cl⁵) |
|---|---|---|---|
| A | <u>DE - A1 - 3 336 249</u> (FOLABI KATRINE HOLM) * Claims; page 12, lines 10-13 * | 1,5,11 | A 01 N 65/00 C 05 F 11/00 |
| A | <u>DE - A1 - 3 040 040</u> (HUMINAL) * Claims * | 1,5 | |
| A | <u>GB - A - 2 173 782</u> (WAHLBERG) * Claims; page 2, lines 58-60 * | 1,11, 12 | |

TECHNICAL FIELDS
SEARCHED (Int Cl⁵)

A 01 N
C 05 F
C 05 G
A 01 C
A 01 G

The present search report has been drawn up for all claims

| Place of search | Date of completion of the search | Examiner |
|---|---|---|
| VIENNA | 14-09-1990 | BECKER |